# EUROPÄISCHE PATENTSCHRIFT

(11) **EP 2 174 538 B1**
(45) Veröffentlichungstag und Bekanntmachung des Hinweises auf die Patenterteilung: **28.12.2011**
(21) Anmeldenummer: 09011703.7
(22) Anmeldetag: 14.09.2009
(51) Int. Cl.: F15B 15/14, A01B 73/04, A01D 34/66, F15B 15/24

(54) **Arbeitsgerät, insbesondere zur heckseitigen oder frontseitigen Anordnung an einem landwirtschaftlichen Fahrzeug**
Working device, in particular for rear or front attachment to an agricultural vehicle
Appareil de travail, notamment pour l'agencement sur la face arrière ou avant d'un véhicule agricole

(30) Priorität: 08.10.2008 DE 102008050459; 04.06.2009 DE 102009023956
(43) Veröffentlichungstag der Anmeldung: 14.04.2010
(73) Patentinhaber: CLAAS Saulgau GmbH, 88348 Bad Saulgau (DE)
(72) Erfinder: Ober, Martin, 78736 Trichtingen (DE)

(56) Entgegenhaltungen:
- EP-A1- 0 268 699
- EP-A1- 1 800 529
- DE-A1- 3 814 928
- US-A- 4 030 551

## Beschreibung

Die Erfindung betrifft ein Arbeitsgerät, insbesondere zur heckseitigen oder frontseitigen Anordnung an einem landwirtschaftlichen Fahrzeug, mit einer wenigstens ein Arbeitsorgan aufweisenden Arbeitseinheit, wobei wenigstens eine mit Druck beaufschlagbare Verstelleinrichtung zum Verstellen der Arbeitseinheit zwischen einer Arbeitsstellung und einer Transportstellung vorgesehen ist, nach dem Obergebegriff des Anspruchs 1.

### Stand der Technik

In der Landwirtschaft sind verschiedene Arbeitsgeräte gebräuchlich, die vorzugsweise heckseitig oder frontseitig oder aber auch im sogenannten Zwischenachsanbauraum landwirtschaftlicher Fahrzeuge wie Traktoren oder dergleichen angeordnet sind. Heutzutage werden derartige Arbeitsgeräte im Allgemeinen für die Transportposition angehoben. Beispielsweise werden bei der Verwendung von mindestens zwei Mähwerken pro Arbeitsgerät, diese von einer eher horizontal ausgerichtet Arbeitsposition, bei der sie auf dem Feld anstehen, für den Transport in eine etwa vertikal ausgerichtete Transportposition hochgeklappt.

Während der Arbeitsphase werden derartige Arbeitsgeräte bzw. Mähwerke oder dergleichen nicht vollständig in die Transportposition angehoben, sondern nur teilweise etwas vom Boden in die sogenannten Vorgewendeposition angehoben. Um ein zügiges Bearbeiten des Feldes zu gewährleisten, sollte das Arbeitsgerät entsprechend schnell von der Arbeitsposition in diese Vorgewendeposition und umgekehrt verstellt werden.

Beispielsweise sind aus den Druckschriften EP 1 131 992 B1 oder EP 1 800 529 B1 bereits Arbeitsgeräte mit Verstelleinrichtungen für Mährwerke bekannt, wobei die Mähwerke mit Hilfe zweier hydraulischer Kolbenzylindersysteme von der Arbeitsstellung über eine Vorgewendestellung in die Transportstellung und umgekehrt übergeführt werden. Es hat sich jedoch gezeigt, dass hierbei die Trageinheit bzw. der Ausleger mit vergleichsweise hoher Geschwindigkeit in die Endlage bzw. Transportstellung schlägt, was zu einer erheblichen Belastung der Tragkonstruktion führt. Darüber hinaus sind diese Hydraulikzylindervorrichtungen steuerungstechnisch und konstruktiv vergleichsweise aufwendig.

Ein weiteres Arbeitsgerät mit den Merkmalen des Oberbegriffs des Anspruchs 1 ist aus der DE 38 14 928 bekannt.

### Aufgabe und Vorteile der Erfindung

Aufgabe der Erfindung ist es demgegenüber, ein Arbeitsgerät der einleitend genannten Art vorzuschlagen, mit dem der konstruktive Aufwand deutlich reduziert wird und wobei das Anschlagen beim Erreichen der Transportstellung vergleichsweise schonend erfolgt.

Diese Aufgabe wird, ausgehend von einem Arbeitsgerät der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßes Arbeitsgerät dadurch aus, dass beim Verstellen der Arbeitseinheit in die Transportstellung wenigstens eine erste Verstellphase mit einer ersten Verstellgeschwindigkeit und eine zweite Verstellphase mit einer zweiten Verstellgeschwindigkeit vorgesehen sind, wobei die erste Verstellgeschwindigkeit größer als die zweite Verstellgeschwindigkeit ist. Dies ermöglicht, dass die sogenannte Vorgewendestellung der Arbeitseinheit vergleichsweise schnell erreicht wird. Das heißt, dass die Arbeitseinheit von der gesenkten Arbeitsposition sehr schnell in eine Zwischenstellung bzw. die Vorgewendestellung angehoben wird. Hiermit wird beispielsweise ein Mährwerk von der Mähposition zum Wenden nach dem Abmähen eines Mästreifens sehr schnell angehoben und nach dem Wenden zum Weitermähen sehr schnell wieder absenkbar.

Mit Hilfe der Erfindung wird erreicht, dass eine besonders konstruktiv einfache Ausbildung der Verstelleinrichtung mit zwei separaten Kolben realisierbar ist. Zudem wird erreicht, dass durch die zwei separaten Kolben unterschiedliche Verstellphasen generierbar sind, womit beispielsweise eine Vorgewendephase und eine Transportstellungsphase verwirklicht werden kann. Durch entsprechend separate Verstellphasen des erfindungsgemäßen Arbeitsgerätes können diese an entsprechend unterschiedliche Anforderungen angepasst werden, wie z.B. verschiedene Verstellwege bzw. -längen. Somit wird gemäß der Erfindung nicht nur eine konstruktiv einfache, sondern auch eine sehr flexible Verstelleinrichtung realisierbar. Dies führt sowohl zu einem wirtschaftlich günstigen erfindungsgemäßen Arbeitsgerät als auch zu einer hohen Akzeptanz bei den Anwendern.

Zudem wird hiermit erreicht, dass die Arbeitseinheit von der Arbeitsstellung bis zur Transportstellung vergleichsweise schnell verstellt wird und trotzdem die Endstellung bzw. Transportstellung langsam erreicht wird, sodass eine Schonung des Arbeitsgerätes bzw. dessen Tragkonstruktion verwirklicht ist. Dieses schonende Erreichen der Transportstellung, insbesondere eines Endanschlages, führt zu einer Reduktion der Belastung entsprechender Tragteile, wodurch diese einerseits vergleichsweise klein bzw. leicht konstruiert werden können und andererseits wird hierdurch die Reparaturanfälligkeit des Arbeitsgerätes gemäß der Erfindung verbessert.

Vorzugsweise weist die Verstelleinrichtung wenigstens eine Bremsvorrichtung zum Reduzieren der Verstellgeschwindigkeit der Arbeitseinheit auf. Es ist denkbar, dass beispielsweise eine Zug-/Druck-Feder, ein Gummidämpfungselement oder dergleichen als Bremsvorrichtung gemäß der Erfindung verwendet werden könnte.

In einer besonderen Weiterbildung der Erfindung umfasst jedoch die zweite Verstellvorrichtung wenigstens ein Drosselelement bzw. ist die Bremsvorrichtung als Drosselelement ausgebildet. Mit Hilfe eines vorteilhaften hydraulischen und/oder pneumatischen Drosselelementes können in vorteilhafter Weise durch Steuerung der Hydraulik bzw. der Pneumatik unterschiedliche Verstellphasen mit unterschiedlichen Verstellgeschwindigkeiten, Verstellzeiten und/oder Verstellwinkel etc. generiert werden.

Vor allem mit Hilfe eines hydraulischen Drosselelementes kann gerade bei in der Landwirtschaft üblichen Hydrauliksystemen eine besonders feine bzw. fein abgestimmte Drosselung realisiert werden. In unterschiedlichen Versuchen konnte ermittelt werden, dass beispielsweise bei landwirtschaftlichen Mähwerken eine hydraulische Bremsung bzw. ein hydraulisches Drosselelement für eine Endlagendämpfung beim Anschlagen in die Transportstellung von besonderem Vorteil ist, insbesondere bezüglich der Belastung bzw. Lebensdauer der Bremskomponenten.

Vorzugsweise ist der Verstellweg des zweiten Kolbens kleiner als der Verstellweg des ersten Kolbens. Hiermit wird erreicht, dass die vergleichsweise schnelle Verstellung der Arbeitseinheit in die Transportstellung zum Großteil des Verstellweges realisiert wird und die vergleichsweise langsame Verstellung lediglich einen kleinen letzten Abschnitt beträgt, bei dem das Arbeitsgerät in die Transportstellung verstellt wird. Hiermit wird sowohl eine vorteilhafte Endlagendämpfung als auch eine möglichst zügige bzw. kurze Verstellung von der Arbeits- in die Transportstellung realisiert. Dies ist für den Anwender von besonderer Bedeutung.

Vorteilhafterweise ist zwischen dem ersten Kolben und dem zweiten Kolben ein Abstandselement zur Festlegung eines minimalen Abstands vorgesehen. Hiermit wird erreicht, dass bei der Verstellung des ersten Kolbens der zweite Kolben mit Hilfe des Abstandselements beim Erreichen einer bestimmten Verstellposition der Kolbenstange mitgenommen bzw. verstellt wird. Zudem verbleibt hierdurch zwischen den beiden Kolben ein vorteilhafter Druck- bzw. Zwischenraum für ein Arbeitsfluid bzw. für ein mit Druck beaufschlagbares Fluid.

In einer vorteilhaften Variante der Erfindung ist die Verstelleinrichtung mit der ersten Verstellvorrichtung und mit der zweiten Verstellvorrichtung als separat handhabbare Baueinheit ausgebildet. Diese Maßnahme führt zu einer besonders konstruktiv vorteilhaften Ausführungsform.

Vorteilhafterweise ist die erste Verstellvorrichtung als einfach wirkende Hubkolbeneinheit ausgebildet. Das bedeutet, dass die erste Verstelleinrichtung lediglich von einer Seite mit Druck beaufschlagbar ist und die Rückstellung vorzugsweise durch eine nicht-pneumatische bzw. nicht-hydraulische Verstellkraft realisiert wird. Beispielsweise kann hierbei das Eigengewicht der Arbeitseinheit beim Absenken von der Transportstellung in die Arbeitsstellung verwendet werden. Dies führt zu einer besonders einfachen konstruktiven Ausgestaltung der Erfindung.

Vorzugsweise ist die zweite Verstellvorrichtung als doppelt wirkende Hubkolbeneinheit ausgebildet. Hiermit wird erreicht, dass die Arbeitseinheit beim Verstellen von der Transportstellung in die Arbeitsstellung sicher auch über ein ggf. vorhandenen Totpunkt hinaus verstellt bzw. gedrückt wird. Beispielsweise kann bei einer Hangstellung des landwirtschaftlichen Fahrzeugs bzw. des Arbeitsgeräts die Arbeitseinheit über einen kurzen Verstellweg zumindest bis zu einem oberen Totpunkt verstellt bzw. gedrückt werden, um dann anschließend, z.B. aufgrund des Eigengewichtes, weiter abgesenkt bzw. in die Arbeitsstellung verstellt zu werden. Hierfür ist beispielsweise eine vorteilhafte Druckerzeugungseinheit zum Druckbeaufschlagen wenigstens des zweiten Kolbens im Vorhub und im Rückhub vorgesehen.

Bei einer bevorzugten Variante der Erfindung ist die Druckerzeugungseinheit zugleich zur wenigstens teilweisen Gewichtsentlastung der Arbeitseinheit in der Arbeitsstellung ausgebildet. Gerade bei der Verwendung von Mähwerken ist es bereits seit langem üblich, diese in der Arbeitsstellung etwas zu entlasten. Hierfür wird eine hydraulische Beaufschlagung der Aufhängung bzw. der Tragkonstruktionen der Mährwerke bzw. des Mähwerkes mittels hydraulischer Kraft vorgesehen. Durch die vorteilhafte Doppelfunktion der Druckerzeugungseinheit gemäß der Erfindung, d. h. sowohl zum Gewichtsentlasten der Arbeitseinheit in der Arbeitsstellung als auch zum Herausdrücken der Arbeitseinheit von der Transportstellung über einen ggf. vorhandenen Totpunkt hinaus, wird eine Reduktion der vorzusehenden Komponenten umgesetzt, was sich konstruktiv und wirtschaftlich günstig auswirkt.

Darüber hinaus wird hiermit erreicht, dass für den Betrieb des Arbeitsgerätes gemäß der Erfindung vergleichsweise wenig hydraulische Anschlüsse bzw. Steueranschlüsse notwendig werden. Gerade bei heutigen, in der Landwirtschaft üblichen Arbeitsgeräten mit zum Teil mehreren Arbeitseinheiten stellt die Anzahl der hydraulischen Anschlüsse bzw. Steuergeräte, die das landwirtschaftliche Fahrzeug wie z.B. ein Traktor oder dergleichen aufweist, ein kritischer bzw. limitierender Faktor dar. Das heißt, dass zum Beispiel für die Arbeitsgeräte des entsprechenden Traktors eine bestimmte Anzahl an hydraulischen Anschlüssen bzw. Steueranschlüsse, vor allem von zweifach wirkenden Steueranschlüssen, limitiert bzw. begrenzt vorhanden sind.

Bei einem vorteilhaften Ausführungsbeispiel der Erfindung weist die Druckerzeugungseinheit wenigstens einen Druckspeicher zur Speicherung von mit Druck beaufschlagtem Arbeitsfluid auf. Es hat sich gezeigt, dass gerade während der Arbeitsphase für die Gewichtsentlastung von Mähwerken oder dergleichen ein Druckspeicher, insbesondere ein hydropneumatischer Druckspeicher, ausgesprochen vorteilhaft einsetzbar ist. Hierbei kann eine vorteilhafte schwimmende bzw. freie Beweglichkeit der (teilweise vom Gewicht entlasteten) Arbeitseinheit in der Arbeitsphase ohne besonderen konstruktiven Aufwand verwirklicht werden.

Vorteilhafterweise ist ein Arbeitsfluid zwischen den beiden Kolben als Luft ausgebildet. Hierdurch kann die Entlüftung beim Verstellen des ersten Kolbens in besonders einfacher Weise erfolgen, d.h. der Kolben weist lediglich eine entsprechende Öffnung bzw. Bohrung zur Umgebungsluft auf, wodurch beim Verstellen des ersten Kolbens Luft entsprechend ausströmt bzw. einströmen kann. Hierdurch werden separate Ab- bzw. Zuleitungen von Hydraulikflüssigkeit entbehrlich.

Vorzugsweise ist das Arbeitsfluid des zweiten Kolbens eine Hydraulikflüssigkeit wie Öl oder dergleichen. Hiermit wird eine vorteilhafte Verstellung des zweiten Kolbens realisierbar, vor allem das Herausdrücken der Arbeitseinheit aus der Transportstellung heraus.

Darüber hinaus wird gerade durch die Verwendung einer Hydraulikflüssigkeit wie Öl oder dergleichen für den zweiten Kolben eine vorteilhafte Drosselung bzw. Verlangsamung der Verstellung der Kolbenstange dadurch erreicht, dass in der ersten Verstellphase vom ersten Kolben (kompressible) Luft verdrängt wird und in der zweiten Verstellphase die Hydraulikflüssigkeit bzw. -öl verdrängt wird. Durch die unterschiedliche Viskosität bzw. unterschiedliche Kompressibliltät der Fluide als auch aufgrund einer vorteilhaften unterschiedlichen Drosselung der Verdrängung ist in vorteilhafter Weise eine unterschiedliche Verstellgeschwindigkeit der Kolbenstange gemäß der Erfindung realisierbar.

In einer besonderen Weiterbildung der Erfindung sind wenigstens zwei Arbeitseinheiten vorgesehen, insbesondere Mähwerke oder Schwadkreisel oder dergleichen. In der heutigen Landwirtschaft sind zur Realisierung großer Arbeitsbreiten mehrere Arbeitseinheiten bei einem Arbeitsgerät von großem Vorteil.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Ansicht von hinten auf ein landwirtschaftliches Fahrzeug mit einem Mähwerk in der Arbeitsstellung mit schräger Bodenanpassung,
- Figur 2: schematisch das landwirtschaftliche Fahrzeug gemäß Figur 1 in der Vorgewendestellung,
- Figur 3: schematisch das Fahrzeug gemäß Figur 1 in der Transportstellung,
- Figur 4: ein schematisch dargestelltes Arbeitsgerät gemäß der Erfindung mit zwei Mähwerken in einer Ansicht von hinten,
- Figur 5: ein vergrößerter, mittiger Ausschnitt aus Figur 4,
- Figur 6: schematische Schnitte durch eine erfindungsgemäße Verstelleinrichtung mit zwei Kolben in verschiedenen Stellungen und
- Figur 7: ein schematisches hydraulisches Schaltbild eines erfindungsgemäßen Arbeitsgerätes.

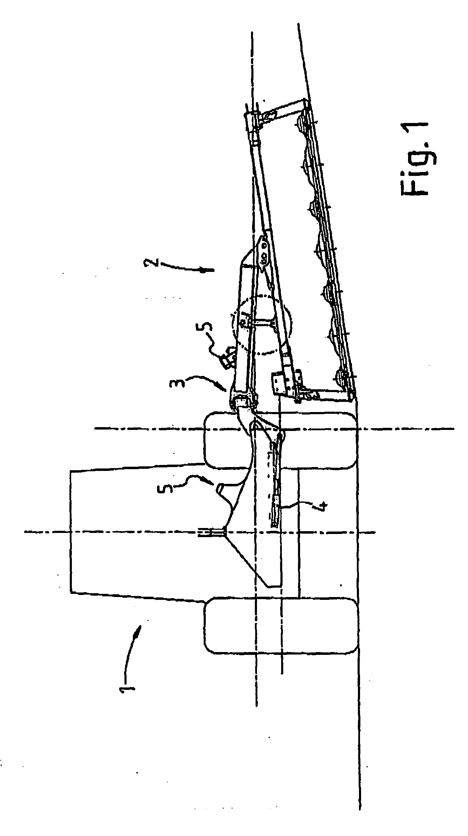

In Figur 1 bis 3 ist jeweils ein Traktor 1 mit einem Mähwerk 2 von hinten dargestellt. Figur 1 zeigt das Mähwerk 2 in Arbeitsstellung, d.h. auf dem Boden bzw. Feld aufliegend. Zudem ist eine Anpassung an eine Bodenunebenheit abgebildet. Hierfür ist das Mähwerk 2 schwimmend bzw. frei beweglich an einer Tragkonstruktion 3 in der Arbeitsstellung gelagert.

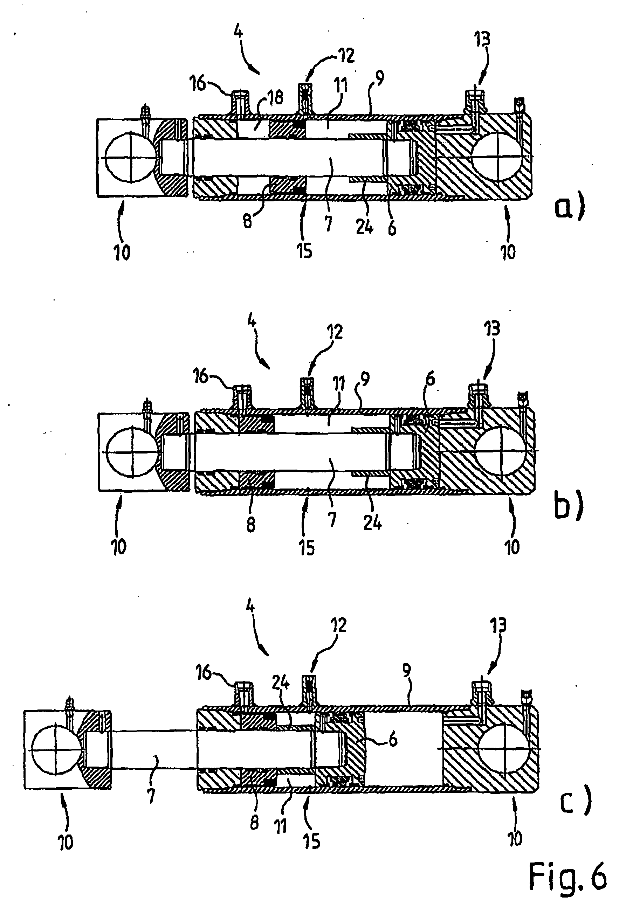

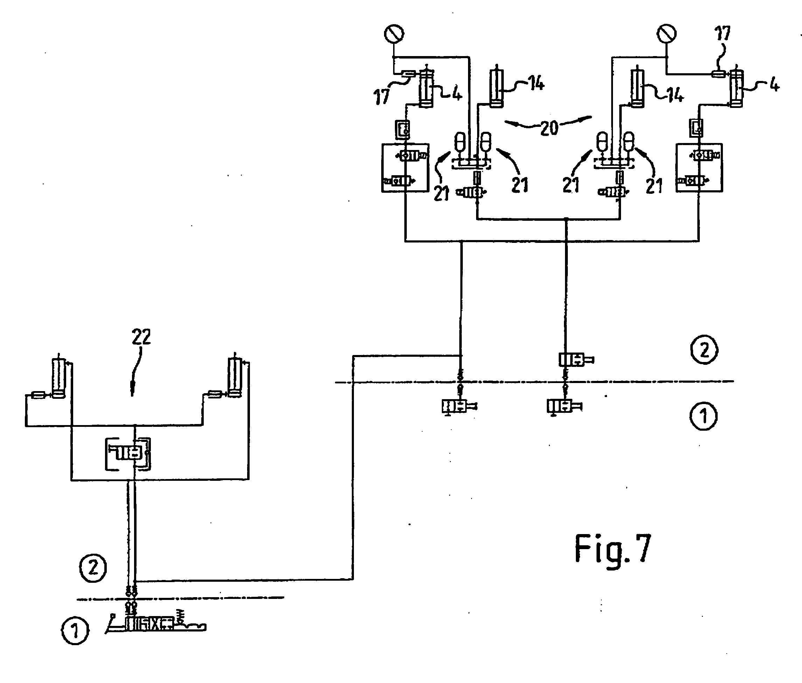

Die schwimmende Lagerung des Mähwerks 2 wird u.a. mit Hilfe eines hydraulischen Hub-Kolben-Zylinders 4 realisiert. Dieser wird nachfolgend vor allem anhand der Figuren 6 und 7 noch näher erläutert.

Darüber hinaus bringt in Arbeitsstellung gemäß Figur 1 ein in den Figuren 1 bis 5 nur gestrichelt dargestellten hydraulischen Hub-Kolbenzylinder 14 eine Kraft auf, um die Auflagekraft des Mähwerks 2 zu verringern. Das heißt diese hydraulische Kraft ist der Gewichtskraft des Mähwerks 2 entgegengerichtet, gleicht diese jedoch nicht vollständig aus. Hierdurch wird der Mähvorgang verbessert. Eine entsprechende Entlastungskraft kann auch in anderer Weise generiert werden, z.B. mittels Druck- oder Zug-Federn oder dergleichen.

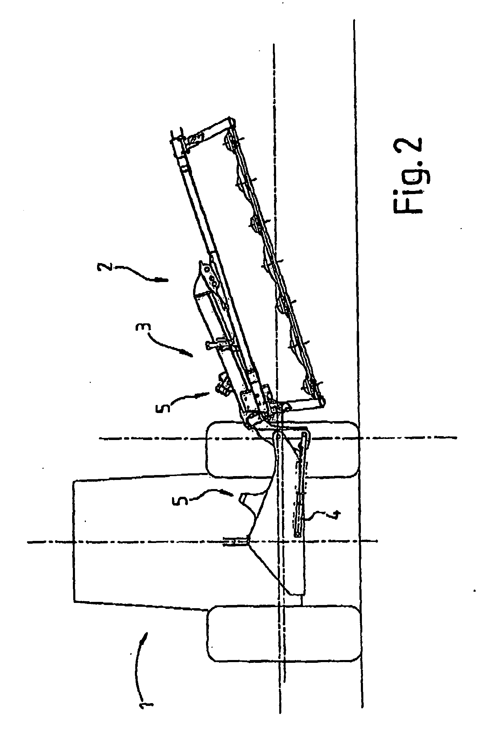

Das Mähwerk 2 wird während der Arbeitsphase, d.h. auf dem Feld, in eine sogenannte Vorgewendestellung gemäß Figur 2 angehoben. Um den Arbeitsablauf nicht allzu sehr zu beeinträchtigen, sollte das Mähwerk 2 von der Arbeitsstellung in diese Stellung sehr schnell anhebbar sein, und umgekehrt möglichst auch sehr schnell abgelassen werden können. Hierzu sollte der Hub-Kolben-Zylinder 4 entsprechend schnell verstellbar bzw. ausfahrbar sein.

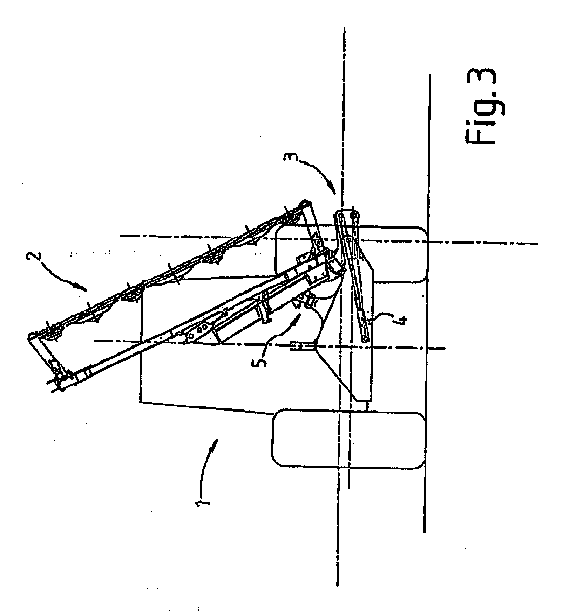

Dagegen sollte das Mähwerk 2 die Transportposition gemäß Figur 3 zumindest in einem letzten Verstellabschnitt nur sehr langsam verstellt werden, um nicht allzu schnell an einem Anschlag 5 anzuschlagen. Ein langsames Erreichen der Transportstellung reduziert die Belastung der gesamten Konstruktion und führt zu einer langen Lebensdauer.

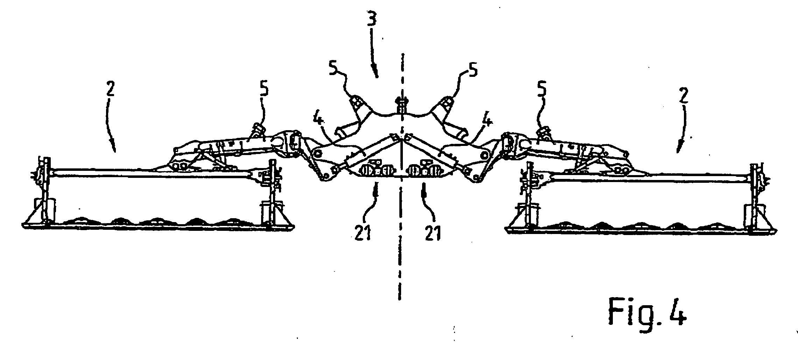

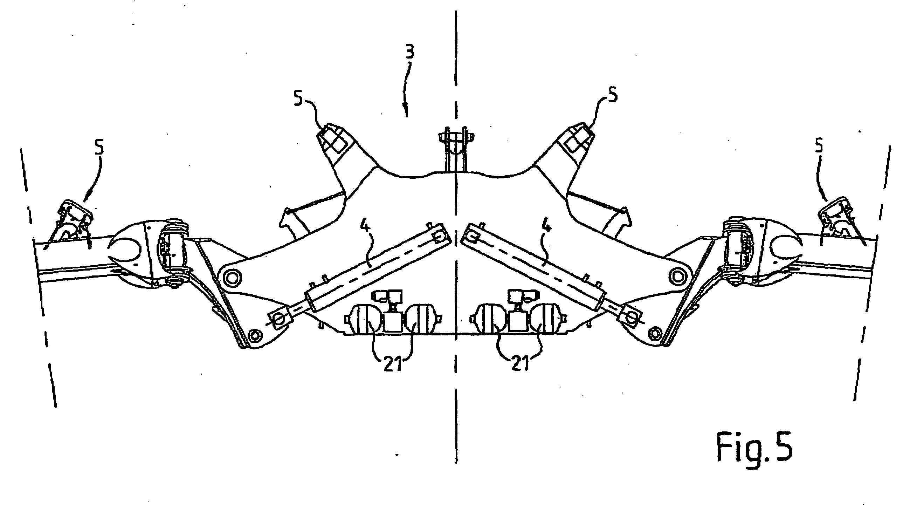

In den Figuren 4 und 5 ist ein weiteres Ausführungsbeispiel eines Arbeitsgerätes gemäß der Erfindung mit insgesamt zwei Mähwerken 2 aufgeführt, um eine größere Arbeitsbreite zu realisieren. Bei einer derartigen Heckmähwerk-Einheit ist der Einsatz eines mittig angeordneten Frontmähwerks gemäß der Erfindung von besonderem Vorteil. Auch kann die Einheit gemäß Figuren 4 und 5 auch zusammen mit einem nicht dargestellten mittigen Mähwerk in vorteilhafter Weise zu einer Dreier-Einheit erweitern werden, vorzugsweise für den Frontanbau an einem Fahrzeug.

In Figur 6 ist der Hub-Kolbenzylinder 4 gemäß der Erfindung dargestellt. Dieser weist einen ersten Kolben 6 auf, der an einer Kolbenstange 7 fest fixiert ist. Längs der Kolbenstange 7 ist ein zweiter Kolben 8 verstellbar bzw. beweglich, d.h. schwimmend, angeordnet. Die drei Abbildungen skizzieren verschiedene Stellungen des Hub-Kolbenzylinders 4.

Der zusätzliche Schwimmkolben bzw. Kolben 8 ist an einen hydropneumatischen Entlastungskreislauf 20 angeschlossen, der u.a. den Hub-Kolbenzylinder 14 umfasst, mit dem das Gewicht des/der Mähwerke in der Arbeitsposition zum Teil ausglichen wird (wie zuvor dargelegt). Die hydraulische Verschaltung/Ansteuerung des Hub-Kolbenzylinders 4 und des Hub-Kolbenzylinders 14 ist aus Figur 7 ersichtlich.

Figur 6a) veranschaulicht die Arbeitsstellung des Mähwerkes 2, wobei der Kolben 6 mit der Kolbenstange 7 schwimmend, d.h. frei beweglich gegenüber einem Zylindermantel 9 verstellbar ist. Hierdurch kann der Abstand der zwei Befestigungspunkte bzw. Ösen 10 während dem Mähbetrieb aufgrund von Bodenunebenheiten etc. selbständig variieren, ohne dass die Tragkonstruktion 3 des Mähwerkes 2 nennenswert belastet wird. Die Be- und Entlüftung einer ersten Zylinderkammer 11 erfolgt über eine Öffnung 12. Hierbei ist es von Vorteil Luft als Arbeitsfluid der Kammer 11 zu verwenden.

Die Druckbeaufschlagung des ersten Kolbens 6 erfolgt über eine Zufuhr 13, mittels derer vorzugsweise Hydrauliköl unter Druck vom Traktor 1 eingepresst wird. Hierdurch wird der Kolben 6 und somit die Kolbenstange 7 verstellt bzw. ausgefahren. Dies ist bis zur maximal ausgefahrenen Stellung gemäß Figur 6c) möglich, die der Transportstellung des Mähwerkes 2 gemäß Figur 3 entspricht.

In der Transportstellung gemäß Figur 6c) ist der zweite Kolben 8 endseitig am Zylindergehäuse 9 angeordnet bzw. an einem Anschlag angeschlagen, wobei der Kolben 8 mittels eines Mitnehmers 24 von einer an einem Anschlag 15 anstehenden Endstellung gemäß Figur 6a) verstellt bzw. mitgenommen wird. Die Verstellgeschwindigkeit der Kolbenstange 7 wird dadurch verändert bzw. verlangsamt, dass an einem Anschluss 16 eine Drossel 17 vorgesehen ist. Hierdurch wird das Abströmen einer Hydraulikflüssigkeit bzw. von Öl einer zweiten Kammer 18 gesteuert bzw. gedrosselt, so dass sich das Mähwerk 2 in einer ersten Verstellphase sehr schnell in die Vorgewendestellung gemäß Figur 2 oder auch darüber hinaus verstellen bzw. anheben lässt und anschließend in vorteilhafter Weise vergleichsweise langsam in einer weiteren Phase in die Transportstellung verstellt bzw. am Anschlag 5 anschlägt.

In der Transportstellung des Mähwerks 2 gemäß Figur 3 bzw. in der Endstellung des Hub-Kolbenzylinders 4 muss das Mähwerk 2 bei dieser Variante über einen Totpunkt hinausgedrückt werden. Hierzu wird aus dem Entlastungskreis 20 über den Anschluss 16 Hydraulikflüssigkeit bzw. Öl gedrückt. Somit wird sowohl der zweite Kolben 8 als auch über den Mitnehmer 24 der erste Kolben 6 und somit die Kolbenstange 7 derart verstellt, dass der Abstand der beiden Ösen 10 verringert wird. Das Mähwerk 2 wird über den ggf. vorhandenen Totpunkt in Richtung Arbeitsstellung gedrückt.

Ab dem oberen Totpunkt zieht das Eigengewicht des Mähwerkes 2 dies nach unten. So reicht es aus, dass der zweite Kolben 8 nach einem relativ kurzen Verstellweg am Anschlag 15 anschlägt und somit blockiert wird. Danach zieht das Eigengewicht des Mähwerkes 2 den ersten Kolben 6 mit dem Mitnehmer 24 und der Kolbenstange 7 vom zweiten Kolben 8 weg. Dadurch ist ein sicheres Abklappen auch am Hang gewährleistet, ohne dass man z.B. ein doppeltwirkendes Steuergerät benötigt. Bei einer extremen Hanglage kann durch Erhöhung des Entlastungsdrucks die Ausdrückkraft zusätzlich erhöht werden, ohne den Traktor 1 an eine andere Position zu fahren.

Durch die Koppelung zum Entlastungskreislauf wird eine Entlüftung und Befüllung des Schwimmkolbenkreislaufes in vorteilhafter Weise erreicht und hat erhebliche Vorteile gegenüber einer Lösung mit einem Druckspeicher, die jedoch auch möglich wäre.

Der Entlastungskreis 20 weist hydropneumatische Speicher 21 auf, die mittels des Hub-Kolbenzylinders 14 die Entlastungskraft generieren. Hiermit kann der Hub-Kolbenzylinder 4 lediglich mit einem einfachwirkenden Steuergerät bzw. Anschluss des Traktors 1 kontrolliert werden.

In Figur 7 ist zudem als Strich-Punkt-Linie die Systemgrenze zwischen Traktor 1 und Mähwerk 2 abgebildet. Weiterhin ist ein optional vorzusehendes Steuersystem 22 für in den Figuren nicht näher dargestellte Schutzbügel für zwei Mähwerke 2 abgebildet.

Gemäß Ausführungsbeispiel ist insbesondere ein Einfachwirkender-Spezialzylinder 4 mit Endlagendämpfung und zusätzlicher Rückholkraft für den Aushub einer Mäheinheit 2 vorgesehen. Der Zylinder 4 wird als zum Teil einfachwirkender Druckzylinder für den Aushub einer seitlichen Mäheinheit 2 eingesetzt. Ein gewöhnlicher doppeltwirkender Zylinder ist in dieser Anwendung eher ungeeignet, da bei fehlender Schwimmstellung am Traktor das Mähwerk und der Traktor bei einer Bodenwelle ausgehebelt würden → sehr hohe Kräfte.

### Bezugszeichenliste

- 1: Traktor
- 2: Mähwerk
- 3: Tragkonstruktion
- 4: Hub-Kolben-Zylinder
- 5: Anschlag
- 6: Kolben
- 7: Kolbenstange
- 8: Kolben
- 9: Zylindergehäuse
- 10: Öse
- 11: Kammer
- 12: Öffnung
- 13: Anschluss
- 14: Hub-Kolben-Zylinder
- 15: Anschlag
- 16: Anschluss
- 17: Drossel
- 18: Kammer
- 20: Kreislauf
- 21: Speicher
- 22: Kreislauf
- 24: Mitnehmer

## Patentansprüche

1. Arbeitsgeräte, insbesondere zur heckseitigen oder frontseitigen Anordnung an einem landwirtschaftlichen Fahrzeug (1), mit einer wenigstens ein Arbeitsorgan aufweisenden Arbeitseinheit (2), wobei wenigstens eine mit Druck beaufschlagbare Verstelleinrichtung zum Verstellen der Arbeitseinheit (2) zwischen einer Arbeitsstellung und einer Transportstellung vorgesehen ist, wobei die Verstelleinrichtung wenigstens eine erste, einen ersten Kolben (6) sowie eine Kolbenstange (7) umfassende Verstellvorrichtung (4) und eine zweite, einen zweiten Kolben (8) umfassende Verstellvorrichtung (4) zum Verstellen der Arbeitseinheit (2) aufweist, wobei der zweite Kolben (8) der zweiten Verstellvorrichtung (4) entlang der Kolbenstange (7) verschiebbar ist, **dadurch gekennzeichnet, dass** beim Verstellen der Arbeitseinheit (2) in die Transportstellung wenigstens eine erste Verstellphase mit einer ersten Verstellgeschwindigkeit und eine zweite Verstellphase mit einer zweiten Verstellgeschwindigkeit vorgesehen sind, wobei die erste Verstellgeschwindigkeit größer als die zweite Verstellgeschwindigkeit ist.

2. Arbeitsgerät nach Anspruch 1, **dadurch gekennzeichnet, dass** die Verstelleinrichtung wenigstens eine Bremsvorrichtung (17) zum Reduzieren der Verstellgeschwindigkeit der Arbeitseinheit (2) aufweist.

3. Arbeitsgerät nach einem der vorgenannten Ansprüche, **dadurch gekennzeichnet, dass** die zweite Verstellvorrichtung (4) wenigstens ein Drosselelement (17) umfasst.

4. Arbeitsgerät nach einem der vorgenannten Ansprüche, **dadurch gekennzeichnet, dass** der Verstellweg des zweiten Kolbens (8) kleiner als der Verstellweg des ersten Kolbens (6) ist.

5. Arbeitsgerät nach einem der vorgenannten Ansprüche, **dadurch gekennzeichnet, dass** zwischen dem ersten Kolben (6) und dem zweiten Kolben (8) ein Abstandselement (24) zur Festlegung eines minimalen Abstandes vorgesehen ist.

6. Arbeitsgerät nach einem der vorgenannten Ansprüche, **dadurch gekennzeichnet, dass** die Verstelleinrichtung mit der ersten Verstellvorrichtung (4) und der zweiten Verstellvorrichtung (4) als separat handhabbare Baueinheit (4) ausgebildet ist.

7. Arbeitsgerät nach einem der vorgenannten Ansprüche, **dadurch gekennzeichnet, dass** die erste Verstellvorrichtung (4) als einfach wirkende Hubkolbeneinheit ausgebildet ist.

8. Arbeitsgerät nach einem der vorgenannten Ansprüche, **dadurch gekennzeichnet, dass** die zweite Verstellvorrichtung (4) als doppeltwirkende Hubkolbeneinheit ausgebildet ist.

9. Arbeitsgerät nach einem der vorgenannten Ansprüche, **dadurch gekennzeichnet, dass** wenigstens eine Druckerzeugungseinheit (20) zum Druckbeaufschlagen wenigstens des zweiten Kolbens (8) im Vorhub und im Rückhub vorgesehen ist.

10. Arbeitsgerät nach Anspruch 9, **dadurch gekennzeichnet, dass** die Druckerzeugungseinheit (20) zugleich zur wenigstens teilweisen Gewichtsentlastung der Arbeitseinheit (2) in der Arbeitsstellung ausgebildet ist.

11. Arbeitsgerät nach Anspruch 9 oder 10, **dadurch gekennzeichnet, dass** die Druckerzeugungseinheit (20) wenigstens einen Druckspeicher (21) zur Speicherung von mit Druck beaufschlagtem Arbeitsfluid aufweist.

12. Arbeitsgerät nach einem der vorgenannten Ansprüche, **dadurch gekennzeichnet, dass** ein Arbeitsfluid zwischen den beiden Kolben (6, 8) als Luft ausgebildet ist.

13. Arbeitsgerät nach einem der vorgenannten Ansprüche, **dadurch gekennzeichnet, dass** die Arbeitseinheit (2) in Transportstellung im Wesentlichen vertikal und in Arbeitstellung im Wesentlichen horizontal ausgerichtet ist.

14. Arbeitsgerät nach einem der vorgenannten Ansprüche, **dadurch gekennzeichnet, dass** das/die Arbeitsorgane als Mähelemente ausgebildet sind, so dass die Arbeitseinheit (2) eine Mäheinheit (2) ist.

## Claims

1. A working device, in particular for rear or front arrangement on an agricultural vehicle (1) comprising a working unit (2) having at least one working member, wherein there is provided at least one adjustment device which can be acted upon with pressure for adjustment of the working unit (2) between a working position and a transport position, wherein the adjustment device has at least one first adjustment unit (4) including a first piston (6) and a piston rod (7) and a second adjustment unit (4) including a second piston (8) for adjustment of the working unit (2), wherein the second piston (8) of the second adjusting unit (4) is displaceable along the piston rod (7), **characterised in that** upon adjustment of the working unit (2) into the transport position there are provided at least a first adjustment phase at a first adjustment speed and a second adjustment phase at a second adjustment speed, the first adjustment speed being greater than the second adjustment speed.

2. A working device according to claim 1 **characterised in that** the adjustment device has at least one braking device (17) for reducing the adjustment speed of the working unit (2).

3. A working device according to one of the preceding claims **characterised in that** the second adjustment unit (4) has at least one throttle element (17).

4. A working device according to one of the preceding claims **characterised in that** the adjustment travel of the second piston (8) is shorter than the adjustment travel of the first piston (6).

5. A working device according to one of the preceding claims **characterised in that** there is provided a spacing element (24) for establishing a minimum spacing between the first piston (6) and the second piston (8).

6. A working device according to one of the preceding claims **characterised in that** the adjustment device with the first adjustment unit (4) and the second adjustment unit (4) is in the form of a separately handleable structural unit (4).

7. A working device according to one of the preceding claims **characterised in that** the first adjustment unit (4) is in the form of a single-acting stroke piston unit.

8. A working device according to one of the preceding claims **characterised in that** the second adjustment unit (4) is in the form of a double-acting stroke piston unit.

9. A working device according to one of the preceding claims **characterised in that** there is provided at least one pressure generating unit (20) for pressure actuation of at least the second piston (8) in the forward stroke and in the return stroke.

10. A working device according to claim 9 **characterised in that** the pressure generating unit (20) is adapted at the same time for at least partially relieving the weight of the working unit (2) in the working position.

11. A working device according to claim 9 or claim 10 **characterised in that** the pressure generating unit (20) has at least one pressure storage means (21) for storing working fluid which is acted upon with pressure.

12. A working device according to one of the preceding claims **characterised in that** a working fluid between the two pistons (6, 8) is in the form of air.

13. A working device according to one of the preceding claims **characterised in that** the working unit (2) is oriented substantially vertically in the transport position and substantially horizontally in the working position.

14. A working device according to one of the preceding claims **characterised in that** the working member or members are in the form of mowing elements so that the working unit (2) is a mowing unit (2).

## Revendications

1. Outil, en particulier destiné à être disposé à l'arrière ou à l'avant d'un véhicule agricole (1), avec une unité de travail (2) comportant au moins un organe de travail, au moins un système de positionnement pouvant être soumis à une pression et permettant de positionner l'unité de travail (2) entre une position de travail et une position de transport étant prévu, le système de positionnement comportant au moins un premier dispositif de positionnement (4) comprenant un premier piston (6) ainsi qu'une tige de piston (7) et un deuxième dispositif de positionnement (4) comprenant un deuxième piston (8) pour positionner l'unité de travail (2), le deuxième piston (8) du deuxième dispositif de positionnement (4) pouvant coulisser le long de la tige de piston (7), **caractérisé en ce que**, lors du positionnement de l'unité de travail (2) dans la position de transport, au moins une première phase de positionnement à une première vitesse de positionnement et une deuxième phase de positionnement à une deuxième vitesse de positionnement sont prévues, la première vitesse de positionnement étant supérieure à la deuxième vitesse de positionnement.

2. Outil selon la revendication 1, **caractérisé en ce que** le système de positionnement comporte au moins un dispositif de freinage (17) pour réduire la vitesse de positionnement de l'unité de travail (2).

3. Outil selon une des revendications précédentes, **caractérisé en ce que** le deuxième dispositif de positionnement (4) comprend au moins un élément d'étranglement (17).

4. Outil selon une des revendications précédentes, **caractérisé en ce que** la course de positionnement du deuxième piston (8) est plus petite que la course de positionnement du premier piston (6).

5. Outil selon une des revendications précédentes, **caractérisé en ce qu'**un élément d'écartement (24) destiné à définir une distance minimale est prévu entre le premier piston (6) et le deuxième piston (8).

6. Outil selon une des revendications précédentes, **caractérisé en ce que** le système de positionnement est réalisé, avec le premier dispositif de positionnement (4) et le deuxième dispositif de positionnement (4), sous la forme d'une unité de construction (4) manoeuvrable séparément.

7. Outil selon une des revendications précédentes, **caractérisé en ce que** le premier dispositif de positionnement (4) est réalisé sous la forme d'une unité à piston alternatif à simple effet.

8. Outil selon une des revendications précédentes, **caractérisé en ce que** le deuxième dispositif de positionnement (4) est réalisé sous la forme d'une unité à piston alternatif à double effet.

9. Outil selon une des revendications précédentes, **caractérisé en ce qu'**il est prévu au moins une unité de production de pression (20) pour soumettre au moins le deuxième piston (8) à une pression lors de la course aller et de la course retour.

10. Outil selon la revendication 9, **caractérisé en ce que** l'unité de production de pression (20) est conçue en même temps pour délester au moins partiellement l'unité de travail (2) dans la position de travail.

11. Outil selon la revendication 9 ou 10, **caractérisé en ce que** l'unité de production de pression (20) comporte au moins un accumulateur de pression (21) pour accumuler du fluide de travail sous pression.

12. Outil selon une des revendications précédentes, **caractérisé en ce qu'**un fluide de travail entre les deux pistons (6, 8) est formé par de l'air.

13. Outil selon une des revendications précédentes, **caractérisé en ce que**, en position de transport, l'unité de travail (2) est orientée sensiblement verticalement et, en position de travail, sensiblement horizontalement.

14. Outil selon une des revendications précédentes, **caractérisé en ce que** le ou les organes de travail sont réalisés sous la forme d'éléments de fauchage, de sorte que l'unité de travail (2) est une unité de fauchage (2).
